# EUROPÄISCHE PATENTSCHRIFT

(11) **EP 2 493 587 B1**
(45) Veröffentlichungstag und Bekanntmachung des Hinweises auf die Patenterteilung: **30.03.2016**
(21) Anmeldenummer: 10773621.7
(22) Anmeldetag: 29.10.2010
(51) Int. Cl.: B01D 25/164, B01D 35/18

(54) **FILTERPLATTE MIT TEMPERIERKÖRPER UND FILTERPAKET MIT EINER SOLCHEN FILTERPLATTE**
FILTER PLATE COMPRISING A TEMPERATURE CONTROL BODY AND FILTER CARTRIDGE COMPRISING SUCH A FILTER PLATE
PLAQUE FILTRANTE DOTÉE D'UN CORPS DE THERMORÉGULATION ET GARNITURE DE FILTRE DOTÉE D'UNE TELLE PLAQUE FILTRANTE

(30) Priorität: 30.10.2009 DE 202009014692 U
(43) Veröffentlichungstag der Anmeldung: 05.09.2012
(73) Patentinhaber: JVK Filtration Systems GmbH, 91166 Georgensgmünd (DE)
(72) Erfinder: HERMANN, Manfred P., 90491 Nürnberg (DE)
(74) Vertreter: Reitstötter Kinzebach
(86) Internationale Anmeldenummer: PCT/EP2010/066440
(87) Internationale Veröffentlichungsnummer: WO 2011/051428

(56) Entgegenhaltungen:
- EP-A1- 1 654 048
- DE-A1- 3 713 419
- DE-U1-202005 006 681
- TW-B- 288 020

## Beschreibung

Die vorliegende Erfindung betrifft eine Filterplatte mit einem Grundkörper und einem elastischen Element, welches ringartig und flüssigkeitsdicht an dem Grundkörper befestigt ist. Des Weiteren betrifft die Erfindung eine Filterpaket mit mehreren Filterplatten.

Es ist bekannt, für eine Filterpresse ein Filterpaket zu bilden, welches aus mehreren paarweise nebeneinander angeordneten Filterplatten besteht. Zwischen den Filterplatten werden jeweils Filterkammern gebildet. Die Filterplatten weisen hierfür eine zentrale Filterfläche und einen die zentrale Filterfläche umrahmenden Dichtrand auf. In der Filterpresse können die Filterplatten voneinander weg und aufeinander zu verfahren werden, wodurch die Filterkammern geöffnet und geschlossen werden können.

Jede Filterkammer weist üblicherweise einen Einlauf und einen Auslauf auf. Ober den Einlauf fließt die zu filternde Suspension, welche üblicherweise als Trübe bezeichnet wird, in die Filterkammer hinein. Die Suspension wird dann mittels eines Filtertuchs gefiltert, wobei die Feststoffe durch das Filtertuch in der Filterkammer zurückgehalten werden, so dass ein sogenannter Filterkuchen entsteht. Das von den Festkörpern befreite Filtrat wird über den Auslauf aus der Filterkammer herausgeleitet.

Um die Restfeuchte im Filterkuchen zu reduzieren und die Filtrationszeiten zu verkürzen, sind Filterpressen bekannt, bei denen zumindest eine Filterplatte einer Filterkammer eine Membran aufweist. Eine solche Filterplatte bezeichnet man als Membranfilterplatte. Bei einer Filterpresse mit Membranfilterplatten schließt sich an die zunächst durchgeführte Druckfiltration eine Pressfiltration an, bei der die elastischen Membranen der Filterkammem mit einem Druckmedium beaufschlagt werden, so dass sie sich ausdehnen und den Raum, in welchem sich der Filterkuchen befindet, verengen. Auf diese Weise wird der Filterkuchen komprimiert, wodurch die Restfeuchte in den Hohlräumen des Filterkuchens weiter verringert wird.

Membranfilterplatten für Filterpressen sind beispielsweise in der EP 0 357 015 B1 und der WO 03/095063 A1 beschrieben.

Um die Restfeuchte aus dem Filterkuchen noch weiter zu verringern, ist es bekannt, den Filterkuchen zu erwärmen. Auch bei einer etwaigen Weiterbearbeitung des Filterkuchens ist es wichtig, einen Filterkuchen mit möglichst geringer Restfeuchte zu erhalten.

Es sind bereits seit Langem Filterpressen bekannt, bei denen das zu filtrierende Gut getrocknet wird. In der DE 590710 ist eine Filterpresse beschrieben, bei welcher das zu filtrierende Gut durch eine Heizplatte getrocknet wird. In dieser Schrift wird von einer Filterpresse ausgegangen, bei der die Heizplatten zwischen den Rahmen der Filterpresse eingeklemmt sind. Eine solche Anordnung weist jedoch den Nachteil auf, dass eine sichere Abdichtung besonders schwierig ist, weil sich die Heizplatten bei der Erwärmung ausdehnen. Aus diesem Grund wird in der DE 590710 vorgeschlagen, die Heizplatten getrennt vom Filterpressenrahmen als in sich geschlossene Heizelemente auszubilden, die frei tragend in die Filterrahmen eingebaut werden, so dass die zu trocknenden Rück-stände allseitig mit der Heizplatte in Berührung stehen.

Aus der DE 37 13 419 C2 ist ein weiteres Verfahren und eine weitere Vorrichtung zum Trocknen eines Filterkuchens in einer Filterpresse bekannt. In diesem Fall erwärmt man den Filterkuchen durch Aufheizen der aus Gummi bestehenden Membran, indem man sie mit erwärmter Druckluft beaufschlagt. Des Weiteren kann der Filterkuchen selbst durch elektrischen Strom erwärmt werden, der von Elektroden auf einer Membran zu Elektroden auf einer gegenüberliegenden Membran fließt

Des Weiteren ist aus der WO 2006/111379 A1 eine heiz- und kühlbare Filterplatte bekannt. Beim Einsatz dieser Filterplatte in einer Filterpresse ist die Membran zwischen der Filterkammer und einer Membrankammer angeordnet. Die Membrankammer wird einerseits von der Membran und andererseits von einem aus Kunststoff bestehenden Grundkörper begrenzt. Dieser Grundkörper weist außerdem Nuten auf, so dass die Dicke des Grundkörpers zu der benachbarten Filterkammer relativ gering ist. In die Membrankammer wird ein erwärmtes Fluid eingeleitet. Auf diese Weise kann durch die Membran hindurch der Filterkuchen in der Filterkammer erwärmt werden. Andererseits kann auch der Filterkuchen in der benachbarten Filterkammer durch den Grundkörper hindurch erwärmt werden, da insbesondere in den Bereichen mit geringerer Wanddicke bei den Nuten ein Wärmeübergang möglich ist

Um einen noch besseren Wärmeübergang von einem Temperierelement auf den Filterkuchen zu erreichen wurde vorgeschlagen, das Temperierelement aus Metall auszubilden. In der WO 2004/024290 A1 ist beispielsweise eine Filterpresse mit einer aus Metall bestehenden Heizplatte beschrieben, die auf einen Kunststoffrahmen aufgeschraubt ist. In der US 2008/0190831 A1 sind die Heizplatten zwischen einem Grundkörper und einer angeschraubten Abdeckplatte fest eingeklemmt. In der WO 2006/089662 A1 ist eine temperierbare Filterplatte beschrieben, bei der als Heiz- bzw. Kühlkörper mindestens zwei miteinander verbundene gewellte Elemente verwendet werden, die einen Hohlraum bilden, der von einem temperierbaren Medium durchströmt werden kann. Der Heiz- bzw. Kühlkörper ist mit einem Rahmen über Stege oder Bolzen beabstandet vom Rahmen starr verbunden.

Des Weiteren ist aus der DE 200 06 891 U1 ein Heizelement für eine Filterpresse bekannt, die mehrere abwechselnd aneinander gereihte, in einen Pressenrahmen eingespannte Membranfilterelemente und Heizelemente umfasst. Das Heizelement umfasst einen Grundkörper, der auf beiden Seiten jeweils mit einer metallischen Platte dichtend abgeschlossen ist, so dass sich verzweigende Heizmediumkanäle entstehen.

Bei Filterplatten, bei denen ein Heizelement aus Metall starr mit einem Kunststoffrahmen verbunden ist, ergibt sich das Problem, dass beim Einsatz der Filterplatten in einer Filterpresse häufig Lecks entstehen oder Spannungen und Verbiegungen des aus dem Heizelement und dem Rahmen bestehenden Systems auftreten. Der Grund hierfür liegt in den extrem unterschiedlichen Wärmeausdehungskoeffizienten von Metall und Kunststoff. Wenn das Heizelement erwärmt wird, dehnt sich dieses sehr viel weniger aus als der aus Kunststoff bestehende Rahmen. Auf Dauer werden hierdurch Relatiwerschiebungen zwischen dem Heizelement und dem Rahmen hervorgerufen, die dazu führen, dass die Dichtelemente beschädigt werden.

Zur Lösung dieses Problems wird in der EP 0 676 225 A1 vorgeschlagen, die Filterpresse vollständig aus Metall auszuführen, wobei die Platten mittels Schweißnähten umlaufend mit einem zugehörigen Rahmen verbunden sind. Derartige Filterplatten sind jedoch sehr teuer.

Ferner wurde in der EP 1 654 048 B1 vorgeschlagen, zwei Metallheizplatten über eine Zentralbohrung und einen Flansch an einem Grundkörper zu befestigen. Durch diese Art der Befestigung besteht für die Heizplatte die Möglichkeit, sich weitgehend unabhängig von dem Grundkörper thermisch auszudehnen, ohne Verspannungen zwischen dem Grundkörper und der Heizplatte hervorzurufen.

Der vorliegenden Erfindung liegt die Aufgabe zugrunde, eine Filterplatte der eingangs genannten Art und ein Filterpaket mit einer solchen Filterplatte bereitzustellen, mit welchen ein Filterkuchen bei einem Einsatz in einer Filterpresse temperiert werden kann, wobei beim Temperieren keine Undichtigkeiten oder Verspannungen auftreten.

Erfindungsgemäß wird diese Aufgabe durch eine Filterplatte mit den Merkmalen des Anspruchs 1 und ein Filterpaket mit den Merkmalen des Anspruchs 12 gelöst. Vorteilhafte Aus- und Weiterbildungen ergeben sich aus den abhängigen Ansprüchen.

Die erfindungsgemäße Filterplatte ist dadurch gekennzeichnet, dass an dem elastischen Element eine Temperierplatte befestigt ist. Durch die Befestigung der Temperierplatte über das elastische Element an dem Grundkörper kann sich die Temperierplatte bei Temperaturveränderungen unabhängig von dem Grundkörper frei ausdehnen bzw. zusammenziehen. Die Veränderungen der Geometrie der Temperierplatte und/oder des Grundkörpers werden vollständig von dem elastischen Element ausgeglichen. Es können insbesondere keine Verspannungen zwischen der Temperierplatte und anderen starren Körpern auftreten, die einen anderen Wärmeausdehnungskoeffizienten als die Temperierplatte haben.

Die Temperierplatte ist insbesondere so an dem elastischen Element befestigt, dass einer thermischen Größenveränderung der Temperierplatte nur von dem elastischen Element ausgeübte Kräfte entgegenwirken. Das elastische Element ist jedoch so ausgebildet, dass es die thermischen Größenveränderungen der Temperierplatte leicht ausgleichen kann, ohne dass es zu Verspannungen oder Undichtigkeiten kommt. Des Weiteren wirken sich auch thermische Größenveränderungen des Grundelements nicht auf die Temperierplatte aus. Auch solche Größenveränderungen werden von dem elastischen Element ausgeglichen.

Gemäß einer Ausgestaltung der erfindungsgemäßen Filterplatte ist die Temperierplatte in Richtung der Plattenebene beabstandet von dem Grundkörper an dem elastischen Element gehalten. In einer Richtung senkrecht zu der Plattenebene, d. h. in Richtung der Plattennormale, kann die Temperierplatte hingegen den Grundkörper oder einen anderen Körper berühren, da die thermische Ausdehnung in dieser Richtung nur sehr gering ist.

Das elastische Element kann eine durchgehende Fläche bilden, auf welcher die Temperierplatte gehalten ist. Da in diesem Fall jedoch Wärme oder Leitungen für ein Temperiermedium durch das elastische Element durchtreten müssen, ist das elastische Element bevorzugt ringförmig ausgebildet. Im Inneren des ringförmigen elastischen Elements ist die Temperierplatte flüssigkeitsdicht an dem elastischen Element befestigt. Sie wird außerdem von dem elastischen Element gehalten. Der Grundkörper wird somit flüssigkeitsdicht von dem elastischen Element und der Temperierplatte abgeschlossen, so dass bei einem Einsatz der Filterplatte in einer Filterpresse eine Filterkammer von der aus dem elastischen Element und der Temperierplatte gebildeten Einheit gebildet werden kann.

Innerhalb der Temperierplatte können gegebenenfalls noch weitere Elemente angebracht sein. Diese werden insbesondere flüssigkeitsdicht so in der Temperierplatte befestigt, dass ein thermische Ausdehnung der Temperierplatte durch ein solches Element nicht behindert wird. Beispielsweise können innerhalb der Temperierplatte Stütznocken befestigt sein. Ferner kann eine Trübebohrung flüssigkeitsdicht in der Temperierplatte befestigt sein.

Gemäß einer Ausgestaltung der erfindungsgemäßen Filterplatte ist das elastische Element mittels einer Schnappverbindung an dem Grundkörper befestigt. Hierfür weist der Grundkörper beispielsweise eine ringförmige Nut auf, in welche das elastische Element eingeklemmt ist. Um das elastische Element in der Nut des Grundkörpers einzuklemmen, kann ein Abdeckrahmen vorgesehen sein, welcher einen Vorsprung aufweist, der in die Nut des Grundkörpers einschnappt und dabei das elastische Element zwischen dem Grundkörper und dem Abdeckrahmen einklemmt. Umgekehrt könnte auch der Grundkörper den Vorsprung aufweisen und die Nut in dem Abdeckrahmen ausgebildet sein. Um das elastische Element in der Nut des Grundkörpers bzw. in einer Nut eines Abdeckrahmens zu befestigen, kann es eine schwalbenschwanzförmige Randwulst aufweisen, deren Form zu der Form der Nut korrespondiert, so dass sie leicht in die Nut eingesetzt werden kann. Die schwalbenschwanzförmige Randwulst kann außerdem eine Auskehlung aufweisen, deren Form mit der Form des Vorsprungs des Abdeckrahmens bzw. des Grundkörpers korrespondiert, so dass der Vorsprung in die Auskehlung des elastischen Elements eingeführt werden kann, wenn sich die Randwulst in der Nut befindet Vorteilhaft an einer Befestigung des elastischen Elements mittels einer Schnappverbindung ist, dass das elastische Element mit der Temperierplatte einfach und schnell ausgetauscht werden kann. Der Montageaufwand ist bei einem solchen Austausch sehr gering.

Gemäß einer anderen Ausgestaltung der erfindungsgemäßen Filterplatte ist das elastische Element mittels einer Schraubverbindung an dem Grundkörper befestigt. Auch in diesem Fall ist das elastische Element mit der Temperierplatte austauschbar, der Montageaufwand ist jedoch höher als bei einer Befestigung des elastischen Elements mittels einer Schnappverbindung.

Gemäß einer weiteren Ausgestaltung der erfindungsgemäßen Filterplatte ist das elastische Element mittels einer Schweißverbindung an dem Grundkörper befestigt. Das elastische Element ist insbesondere in den Grundkörper eingeschweißt oder an den Grundkörper angeschweißt. Diese Befestigungsart bietet den Vorteil, dass im Vergleich zu einer Befestigung mit einer Schraubverbindung der Montageaufwand geringer ist. Das elastische Element mit der Temperierplatte ist in diesem Fall jedoch nicht austauschbar.

Die Temperierplatte besteht insbesondere aus einem wärmeleitenden Material. Sie kann beispielsweise aus einem Metall oder aus einem wärmeleitenden Kunststoff, z. B. einem temperaturleitfähigen Polymer, oder einer Kombination hiervon bestehen. Auf diese Weise kann ein sehr guter Wärmeübergang von der Temperierplatte auf einen Filterkuchen hergestellt werden. Da außerdem die Temperierplatte über das elastische Element flexibel an dem Grundkörper befestigt ist, kann die Temperierplatte während der Trocknung gegen den Filterkuchen gedrückt werden und auch dann in Kontakt mit dem Filterkuchen bleiben, wenn dieser schrumpft. Das elastische Element kann somit nicht nur thermischen Größenveränderungen der Temperierplatte in der Plattenebene ausgleichen, es erlaubt auch eine Bewegung der Temperierplatte in Richtung der Plattennormale. Somit kann zum einen während des gesamten Trocknungsvorgangs ein sehr guter Wärmeübergang zwischen der Temperierplatte und dem Filterkuchen hergestellt werden. Zum anderen kann verhindert werden, dass der Filterkuchen bei der Trocknung bricht Ein Brechen des Filterkuchens ist nachteilig, da hierdurch ein bei der Trocknung anlegendes Vakuum zusammenbrechen kann, wodurch die weitere Trocknung erheblich beeinträchtigt oder verhindert wird.

Gemäß einer weiteren Ausbildung der erfindungsgemäßen Filterplatte ist zumindest eine Oberfläche der Temperierplatte strukturiert. Bei der strukturierten Oberfläche der Temperierplatte handelt es sich insbesondere um die Seite der Temperierplatte, welche bei einem Einsatz in einer Filterpresse dem Filterkuchen zugewandt ist. Dabei werden auf dieser Oberfläche der Temperierplatte insbesondere Kanäle gebildet. Ober diese Kanäle kann beim Trocknen des Filterkuchens die Restfeuchte als Flüssigkeit oder Dampf entweichen. Die Kanäle können beispielsweise durch ein Drahtgitter gebildet sein, das auf der Oberfläche der Temperierplatte angeordnet ist. Ferner können die Kanäle durch eine Profilierung der Oberfläche der Temperierplatte gebildet sein.

Das elastische Element und die Temperierplatte der erfindungsgemäßen Filterplatte können eine Membran bilden, so dass eine Membranfilterplatte bereitgestellt wird. Durch diese Membran kann somit der Filterkuchen nicht nur zusammengepresst werden, sondern auch temperiert, insbesondere erwärmt werden.

Der Grundkörper der erfindungsgemäßen Filterplatte besteht insbesondere aus einem Kunststoff, beispielsweise aus Polypropylen. Durch diese Ausgestaltung lässt sich die erfindungsgemäße Filterplatte kostengünstig herstellen. Ein aus Kunststoff bestehender Grundkörper besitzt außerdem den Vorteil, dass er ein thermischer Isolator ist. Es wird daher eine Wärmeabstrahlung nach außen vermieden. Außerdem erwärmt sich der Kunststoff nur wenig. Eine zu starke Erwärmung des Kunststoffs hätte nämlich den Nachteil, dass am Dichtrand Undichtigkeiten auftreten könnten. Außerdem verringert sich die Festigkeit des Kunststoffs, wenn dieser zu stark erwärmt wird. Dies hätte zur Folge, dass bei einem Einsatz in einer Filterpresse sich der maximale Druck, welcher auf die Filterplatte ausgeübt werden dürfte, verringern würde.

Das erfindungsgemäße Filterpaket umfasst mehrere Filterplatten. Zumindest eine der Filterplatten ist wie die vorstehend beschriebene erfindungsgemäße Filterplatte ausgebildet. Bei dem Filterpaket ist auf einer Seite der aus dem elastischen Element und der Temperierplatte gebildeten Einheit eine Filterkammer gebildet. Ferner ist eine Temperiereinrichtung zum Temperieren der Temperierplatte vorgesehen. Bei dem Filterpakt kann insbesondere jede zweite Filterplatte als Membran ausgebildet sein. Die Membran kann z. B. von dem elastischen Element und der daran befestigten Temperierplatte gebildet sein. Bevorzugt wird in dem Filterpaket jedoch die Filterkammer auf einer Seite von der erfindungsgemäßen Filterplatte begrenzt und auf der anderen Seite von einer an sich bekannten Membranfilterplatte.

Die Temperierplatte kann beispielsweise elektrische beheizbar sein. Gemäß einer anderen Ausgestaltung ist von der anderen Seite der aus dem elastischen Element und der Temperierplatte gebildeten Einheit her, d. h. von der der Filterkammer abgewandten Seite her, die Temperierplatte mit einem Temperiermedium beaufschlagbar. Schließlich kann die Temperierplatte auch Temperierkanäle aufweisen, durch welche ein Temperiermedium durchleitbar ist.

Die Erfindung wird nun anhand eines Ausführungsbeispiels mit Bezug zu den Zeichnungen erläutert.
- Figur 1: zeigt eine Explosionsdarstellung des Aufbaus eines Ausführungsbeispiels der erfindungsgemäßen Filterplatte,
- Figur 2: zeigt eine Aufsicht auf den Grundkörper des Ausführungsbeispiels der erfindungsgemäßen Filterplatte,
- Figur 3: zeigt den Schnitt B-B des in Fig. 2 gezeigten Grundkörpers,
- Figur 4: zeigt die aus einem elastischen Element und der Temperierplatte gebildete Einheit des Ausführungsbeispiels der erfindungsgemäßen Filterplatte,
- Figur 5: zeigt den Schnitt A-A der in Fig. 4 gezeigten Einheit,
- Figur 6: zeigt das Detail B des in Fig. 5 gezeigten Schnitts,
- Figur 7: zeigt eine Aufsicht auf den Abdeckrahmen des Ausführungsbeispiels der erfindungsgemäßen Filterplatte,
- Figur 8: zeigt den Schnitt G-G des in Fig. 7 gezeigten Abdeckrahmens,
- Figur 9: zeigt eine Aufsicht auf die zusammengesetzte Filterplatte des Ausführungsbeispiels und
- Figur 10: zeigt den Schnitt A-A der in Fig. 9 gezeigten Filterplatte.

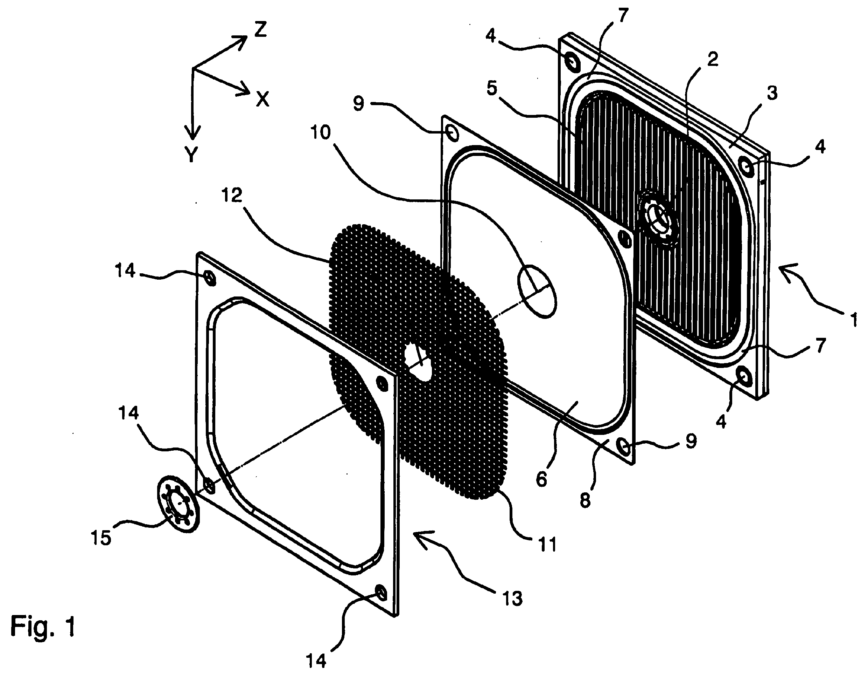

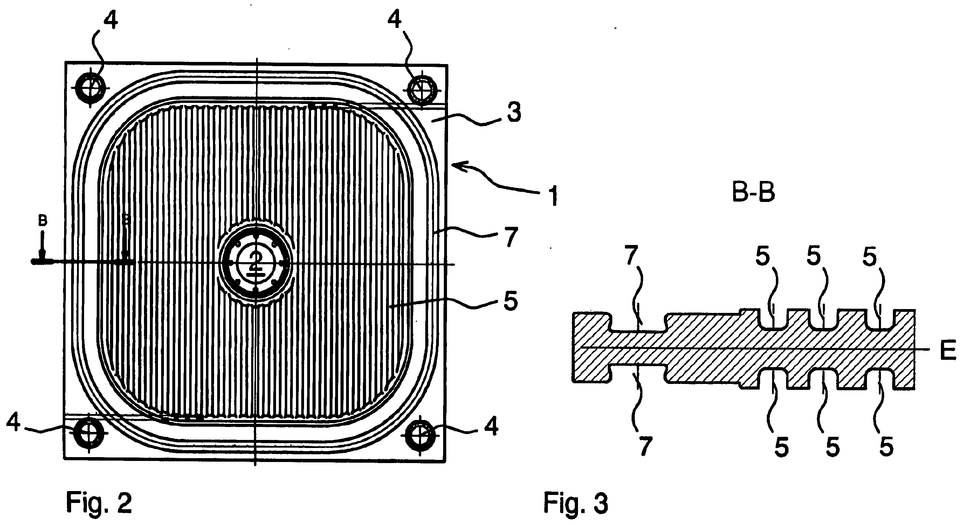

Fig. 1 veranschaulicht den grundsätzlichen Aufbau der mehrteiligen Filterplatte. Die Filterplatte umfasst einen Grundkörper 1. Der Grundkörper 1 weist eine zentrale Filtrateinführbohrung 2 und im Randbereich 3 Eckbohrungen 4 auf, über welche das Filtrat abgeführt wird. Im Randbereich 3 ist außerdem eine ringförmig umlaufende Befestigungsnut 7 gebildet. Des Weiteren sind auf der Oberfläche des Grundkörpers 1, die der Temperierplatte 6 zugewandt ist, Verteilerkanäle 5 ausgebildet, durch welche ein Temperiermedium strömen kann. Anstatt der in den Fig. 1 und 2 gezeigten Kanäle 5 bzw. Rillen könnte der Grundkörper 1 auch eine Noppenfläche aufweisen, so dass sich das Temperiermedium in allen Richtungen schnell verteilen kann.

An den Grundkörper 1 schließt sich eine aus einem elastischen Element 8 und der Temperierplatte 6 gebildete Einheit an. Das elastische Element 8 besteht beispielsweise aus einem Elastomer. Es bildet insbesondere einen Ring und ist - wie es später im Detail erläutert wird - flüssigkeitsdicht bei der Befestigungsnut 7 an dem Grundkörper 1 befestigt.

Die Temperierplatte 6 ist im Inneren des Rings des elastischen Elements 8 an dem elastischen Element 8 befestigt. Sie wird von diesem Element 8 so gehalten, dass sie in Richtung der Plattenebene, die von dem Vektoren X und Y aufgespannt wird, bewegbar ist. Bei einer Bewegung oder Größenveränderung der Temperierplatte 6 in der X-Y-Ebene wirken auf die Temperierplatte 6 zunächst nur Kräfte, die von dem elastischen Element 8 ausgeübt werden. Die Temperierplatte 6 ist insbesondere in der X-Y-Ebene beabstandet von dem Grundkörper 1 gehalten. Die thermische Ausdehnung der Temperierplatte 6 wird somit nicht durch die Befestigung der Temperierplatte 6 an dem Grundkörper 1 behindert, da diese durch das elastische Element 8 ausgeglichen wird.

Die Temperierplatte 6 besteht aus einem wärmeleitenden Material, insbesondere aus einem sehr gut wärmeleitenden Material, wie z. B. Metall oder einem Kunststoff mit hoher Wärmeleitfähigkeit Die Temperierplatte 6 ist über den gesamten Umfang flüssigkeitsdicht mit dem elastischen Element 8 verbunden. Besteht das elastische Element 8 aus einem Elastomer und die Temperierplatte 6 aus Metall, kann die Befestigung der Temperierplatte 6 beispielsweise über eine sogenannte Schwingmetallverbindung erfolgen. Innerhalb der ringförmigen umlaufenden Befestigungsnut 7 ist auf einer Seite des Grundkörpers 1 somit von dem elastischen Element 8 und der Temperierplatte 6 ein flüssigkeitsdichter Bereich abgeschlossen.

Das elastische Element 8 weist außerhalb der umlaufenden Befestigung an dem Grundkörper 1 Eckbohrungen 9 auf, die mit den Eckbohrungen 4 des Grundkörpers 1 korrespondieren. Des Weiteren kann in der Temperierplatte 6 eine Zentralbohrung 10 vorgesehen sein, welche mit der Filtrateinführbohrung 2 des Grundkörpers 1 korrespondiert.

Auf der Oberfläche der Temperierplatte 6, die dem Grundkörper 1 abgewandt ist, ist auf der Temperierplatte 6 ein Gitter 11 angeordnet. Das Gitter 11 ist jedoch so befestigt, dass es eine thermische Ausdehnung oder ein thermisches Zusammenziehen der Temperierplatte 6 in der X-Y-Ebene nicht behindert. Durch das Gitter 11 werden Kanäle gebildet, über welche bei der Trocknung eines Filterkuchens in einer Filterpresse Restfeuchte abgeführt werden kann. Auch das Gitter 11 weist eine zentrale Bohrung 12 auf, durch welche ein Filtrateinführkanal durchtreten kann. Statt des Gitters 11 kann die Oberfläche der Temperierplatte 6 auch strukturiert oder profiliert sein, so dass hierdurch Kanäle für das Abführen der Restfeuchte gebildet werden. Es ist wichtig, dass die Kanäle zum Abführen der Restfeuchte einen ausreichend großen Querschnitt aufweisen. Wenn die Restfeuchte in Form von Dampf abgeführt wird, kann hierdurch eine frühzeitige Kondensation innerhalb der Kanäle verhindert werden. Durch das Gitter 11 bzw. die Strukturierung oder Profilierung der Oberfläche der Temperierplatte 6 können ohne Weiteres genügend große Ablaufquerschnitte realisiert werden.

Für die Befestigung des elastischen Elements 8 an dem Grundkörper 1 kann optional ein Abdeckrahmen 13 vorgesehen sein. Auch der Abdeckrahmen 13 weist Eckbohrungen 14 auf, die zu den Bohrungen 9 des elastischen Elements 8 und den Bohrungen 4 des Grundkörpers 1 korrespondieren. Schließlich kann ein Stützring 15 vorgesehen sein, der durch die Bohrungen 12 und 10 durchtritt und an der Filtrateinführbohrung 2 des Grundkörpers 1 befestigt ist.

Durch die zusammengesetzte Filterplatte tritt in der Mitte ein Kanal durch, welcher von den Bohrungen 2, 10 und 12 gebildet ist. Die Temperierplatte 6 ist gegenüber diesem Kanal flüssigkeitsdicht abgedichtet. Beispielsweise können in diesem zentralen Bereich herkömmliche Dichtringe verwendet werden, da sie die thermische Ausdehnung der Temperierplatten 6 in radialer Richtung nicht behindern würden. Gemäß einer anderen Ausgestaltung ist der innere Rand der Bohrung 10 der Temperierplatte 6 mit dem zentralen Kanal über ein weiteres (nicht gezeigtes) elastisches Element verbunden, und zwar auf die gleiche Weise wie die Temperierplatte 6 am äußeren Rand mittels des elastischen Elements 8 an dem Grundkörper 1 befestigt ist. Des Weiteren ist es möglich, dass der Grundkörper 1, die Temperierplatte 6 und das optional vorgesehene Gitter 11 keine zentralen Bohrungen aufweisen und die zu filternde Suspension über den Randbereich 3 eingeführt wird.

In Fig. 2 ist eine Aufsicht auf den Grundkörper 1 gezeigt; in Fig. 3 der Schnitt B-B der Fig. 2, welcher den Bereich beidseitig der Befestigungsnut 7 darstellt. Wie aus Fig. 3 ersichtlich, ist der Grundkörper 1 symmetrisch hinsichtlich einer zentralen Ebene E ausgebildet. Bei einem Filterpaket kann auf einer Seite des Grundkörpers 1 das elastische Element 8 mit der Temperierplatte 6 befestigt sein. Auf der anderen Seite des Grundkör pers 1 kann entweder auch das elastische Element 8 mit der Temperierplatte 6 befestigt sein oder eine herkömmliche Membran einer Membranfilterplatte.

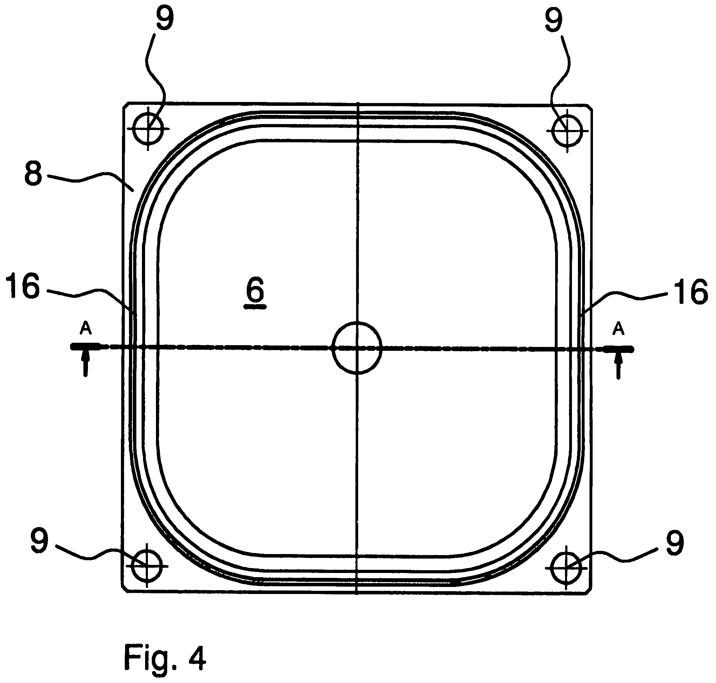

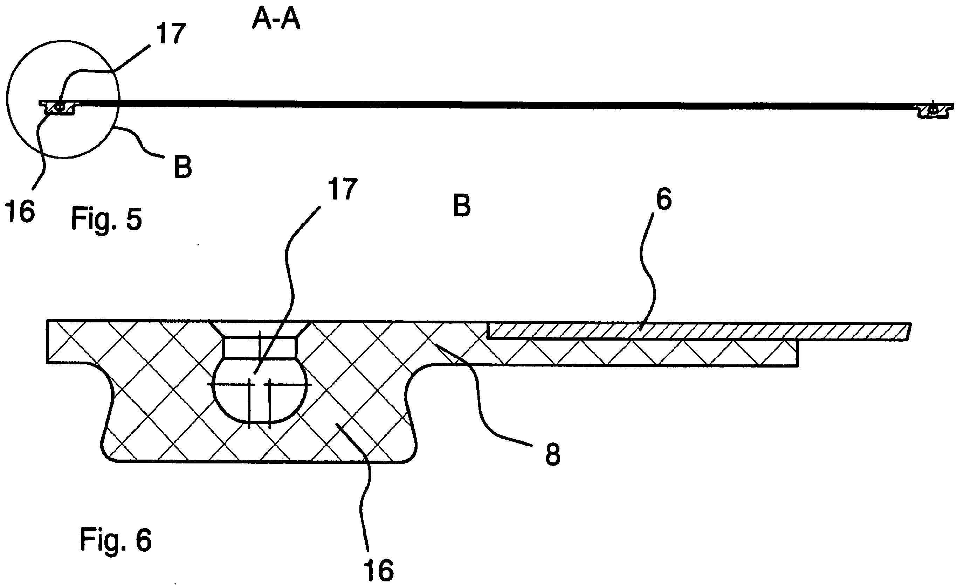

Fig. 4 zeigt eine Aufsicht auf die von dem elastischen Element 8 und der Temperierplatte 6 gebildete Einheit gezeigt; Fig. 5 den Schnitt A-A der in Fig. 4 gezeigten Einheit und Fig. 6 das Detail B der Fig. 5. Wie insbesondere aus Fig. 6 ersichtlich, weist das elastische Element 8 eine Randwulst 16 auf. Diese Randwulst 16 ist schwalbenschwanzartig geformt. Die Form korrespondiert zu der Form der Befestigungsnut 7 des Grundkörpers 1 (siehe Fig. 3). Die Randwulst 16 kann somit in die umlaufende Besfestigungsnut 7 eingeführt werden. Des Weiteren ist innerhalb der schwalbenschwanzförmigen Randwulst 16 eine Auskehlung 17 gebildet, welche diesen Bereich des elastischen Elements 8 elastische verformbar und deshalb leicht in die Befestigungsnut 7 einsetzbar macht. In die Auskehlung 17 kann ein Vorsprung 18 des Abdeckrahmens 13 eingreifen und auf diese Weise ein Schnappverbindung zwischen dem Abdeckrahmen 13 und dem Grundkörper 1 herstellen, wobei das elastische Element 8 hierdurch flüssigkeitsdicht in der ringförmig umlaufenden Befestigungsnut 7 befestigt wird.

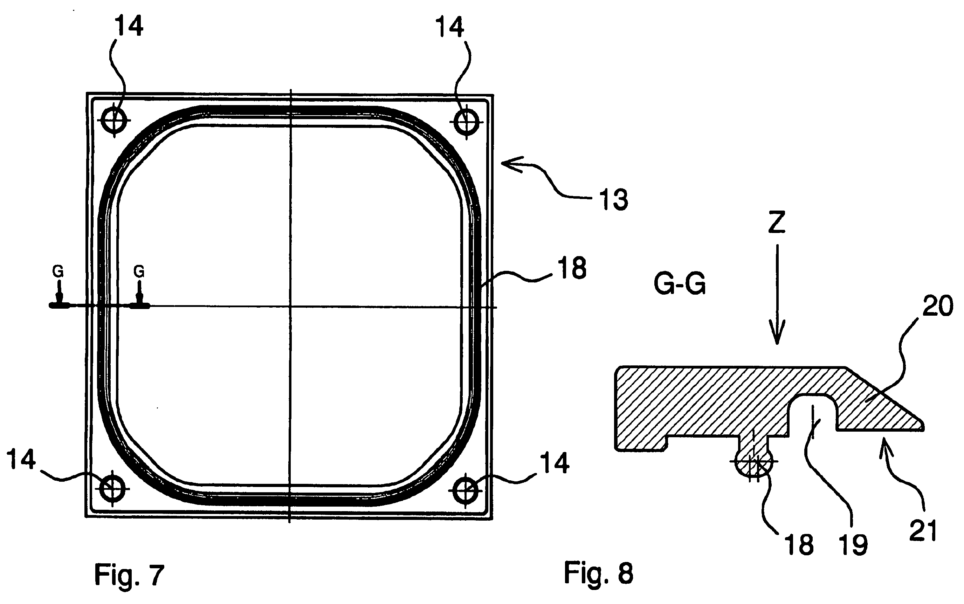

In Fig. 7 ist eine Aufsicht auf den Abdeckrahmen 13 und in Fig. 8 der Schnitt G-G des in Fig. 7 gezeigten Abdeckrahmens 13 gezeigt. In Fig. 8 ist insbesondere der Vorsprung 18 erkennbar, welcher bei der Befestigung des elastischen Elements 8 in die Auskehlung 17 der Randwulst 16 des elastischen Elements 8 eingreift. Des Weiteren ist radial innen von dem Vorsprung 18 ein Ablaufkanal 19 gebildet. Über den Ablaufkanal 19 kann das Filtrat zu den Bohrungen 14, 9, 4 geführt werden und über diese ablaufen. Außerdem weist die Abdeckplatte 13 eine umlaufende Nase 20 auf, welche durch die Fläche 21 einen Anschlag für die Temperierplatte 6 in negativer Z-Richtung, d. h. in Richtung der Normalen der Temperierplatte 6, bildet.

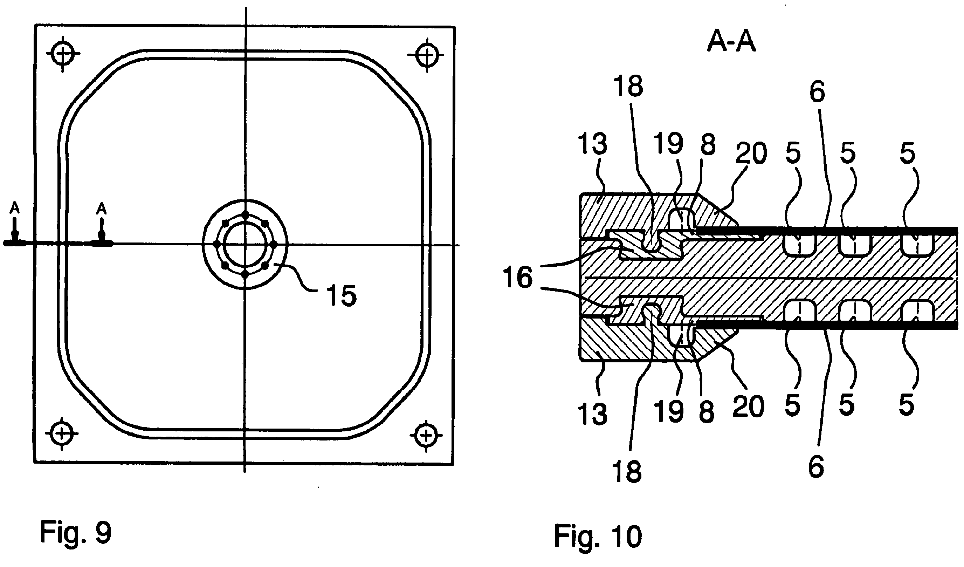

In Fig. 9 ist eine Aufsicht auf die zusammengesetzte Filterplatte gezeigt, in Fig. 10 der Schnitt A-A der in Fig. 9 gezeigten Filterplatte. Die Befestigung des elastischen Elements 8 an dem Grundkörper 1 ist besonders gut in Fig. 10 zu erkennen. Die schwalbenschwanzförmige Randwulst 16 des elastischen Elements 8 wird in der Befestigungsnut 7 des Grundkörpers 1 aufgenommen. Gleichzeitig greift der Vorsprung 18 des Abdeckrahmens 13 in die Auskehlung 17 der Randwulst 16 des elastischen Elements 8 ein, so dass die Randwulst 16 in der Befestigungsnut 7 eingeklemmt ist. Gleichzeitig wird durch den Vorsprung 18 und die Befestigungsnut 7 eine Schnappverbindung hergestellt. Die Größen und Formen des Vorsprungs 18, der Randwulst 16 und der Befestigungsnut 7 sind nur so aufeinander abgestimmt, dass die Teile unter leichtem Druck ineinander gleiten und dann in dieser Stellung verharren, wobei die hierdurch hergestellte Verbindung flüssigkeitsdicht ist.

Ferner ist in Fig. 10 erkennbar, dass die Temperierplatte 6 auf der einen Seite die Oberfläche des Grundkörpers 1 berührt. Im Randbereich, d. h. in dem Bereich, bei welchem sie mit dem elastischen Element 8 verbunden ist, schlägt sie auch an den Anschlag 21 (siehe Fig. 8) der Nase 20 des Abdeckrahmens 13 an. Bei dieser Ausgestaltung wird somit eine Bewegung der Temperierplatte 6 von dem Grundkörper 1 weg, d. h. in Richtung der Normalen (Z-Richtung) der Platte 6, verhindert. Es wird jedoch darauf hingewiesen, dass die Temperierplatte 6 zwar in Richtung der Normalen den Grundkörper 1 und ggf. auch den Abdeckrahmen 13 berührt, in Richtung der Plattenebene, d. h. in der X-YEbene, ist sie jedoch beabstandet von dem Grundköper 1 und auch von dem Abdeckrahmen 13 an dem elastischen Element 8 befestigt ist. Eine thermische Ausdehnung der Temperierplatte 6 führt somit weder zu Undichtigkeiten bei der Befestigung an dem Grundkörper 1 noch zu Verspannungen oder Verformungen von Teilen der Filterplatte.

Auf der von dem Grundkörper 1 abgewandten Seite der Temperierplatte 6 wird das (nicht gezeigte) Filtertuch für die Filterplatte angeordnet. Es kann beispielsweise zwischen der Temperierplatte 6 bzw. dem elastischen Element 8 einerseits und dem Anschlag 21 der Nase 20 des Abdeckrahmens 13 andererseits eingeklemmt werden. Auf der von der Temperierplatte 6 abgewandten Seite des Filtertuchs ist somit eine Filterkammer 22 gebildet. Von Seiten der Filterkammer 22 ausgehend ist somit zunächst das Filtertuch, danach (optional) das Gitter 11, dann das elastische Element 8 bzw. die Temperierplatte 6 und schließlich der Grundkörper 1 angeordnet.

Durch die Verteilerkanäle 5 des Grundkörpers 1 kann ein Temperiermedium strömen. Dieses befindet sich in unmittelbarem Kontakt mit der Temperierplatte 6. Da die Temperierplatte 6 einen sehr hohen Wärmeleitungskoeffizienten besitzt, kann sie die z. B. über das Temperiermedium zugeführte Wärme sehr gut an einen Filterkuchen abgeben, welcher sich in der Filterkammer 22 befindet.

Bei einer anderen Ausgestaltung könnte die Temperierplatte 6 auch elektrisch beheizt werden. Ferner könnten im Inneren der Temperierplatte 6 Temperierkanäle ausgebildet sein, durch welche das Temperiermedium durchleitbar ist

Bei einer Filterpresse werden mehrere wie in den Fig. 9 und 10 gezeigte Filterpakete aneinander gefügt, um auf diese Weise eine Vielzahl von Filterkammern 22 zu bilden. Nachdem die über die Filtrateinführbohrung 2 zugeführte Suspension gefiltert wurde und über den von den Eckbohrungen 4, 9 und 14 gebildeten Ablaufkanal als Filtrat abgelaufen ist, kann der verbleibende Filterkuchen mittels der Temperierplatte 6 getrocknet werden.

Alternativ kann eine Filterplatte des Filterpakets als Membranfilterplatte ausgebildet sein. In diesem Fall wird beispielsweise auf einer Seite des Grundkörpers 1 auf an sich bekannte Weise eine Membran befestigt, wie es beispielsweise in der EP 0 357 015 B1 beschrieben ist. Des Weiteren kann auch die von dem elastischen Element 8 und der Temperierplatte 6 gebildete Einheit als Membran ausgebildet sein. Hierfür kann das elastische Element 8 in radialer Richtung breiter ausgebildet werden, der Radius der Temperierplatte 6 wäre dann kleiner, so dass die Temperierplatte 6 nicht mehr gegen die Fläche 21 der Nase 20 anschlägt. Die Temperierplatte 6 wäre dann in Z-Richtung von dem Grundkörper 1 weg bewegbar. Über die Verteilerkanäle 5 könnte dann ein Druckmedium zugeführt werden, welches gleichzeitig als Temperiermedium wirken kann, um die Temperierplatte 6 gegen den Filterkuchen zu pressen.

### BEZUGSZEICHENLISTE

- 1: Grundkörper
- 2: Filtrateinführbohrung
- 3: Randbereich
- 4: Eckbohrungen
- 5: Verteilerkanäle
- 6: Temperierplatte
- 7: Befestigungsnut
- 8: elastisches Element
- 9: Eckbohrungen des elastischen Elements
- 10: zentrale Bohrung der Temperierplatte
- 11: Gitter
- 12: zentrale Bohrung des Gitters
- 13: Abdeckrahmen
- 14: Eckbohrungen
- 15: Stützring
- 16: Randwulst
- 17: Auskehlung
- 18: Vorsprung des Abdeckrahmens
- 19: Ablaufkanal
- 20: Nase
- 21: Anschlag
- 22: Filterkammer

## Patentansprüche

1. Filterplatte mit einem Grundkörper (1) und einem elastischen Element (8), welches ringartig und flüssigkeitsdicht an dem Grundkörper (1) befestigt ist,
**dadurch gekennzeichnet,**
**dass** an dem elastischen Element (8) eine Temperierplatte (6) befestigt ist, die aus einem wärmeleitenden Material besteht.

2. Filterplatte nach Anspruch 1,
**dadurch gekennzeichnet,**
**dass** die Temperierplatte (6) so an dem elastischen Element (8) befestigt ist, dass einer thermischen Größenveränderung der Temperierplatte (6) und/oder des Grundelements (1) nur von dem elastischen Element (8) ausgeübte Kräfte entgegenwirken.

3. Filterplatte nach Anspruch 1 oder 2,
**dadurch gekennzeichnet,**
**dass** die Temperierplatte (6) in Richtung der Plattenebene (X-Y) beabstandet von dem Grundkörper (1) an dem elastischen Element gehalten ist.

4. Filterplatte nach einem der vorhergehenden Ansprüche,
**dadurch gekennzeichnet,**
**dass** das elastische Element (8) ringförmig ist und im Inneren des ringförmigen elastischen Elements (8) die Temperierplatte (6) flüssigkeitsdicht an dem elastischen Element (8) befestigt und an diesem gehalten ist.

5. Filterplatte nach einem der vorhergehenden Ansprüche,
**dadurch gekennzeichnet,**
**dass** das elastische Element (8) mittels einer Schnappverbindung an dem Grundkörper (1) befestigt ist.

6. Filterplatte nach Anspruch 5,
**dadurch gekennzeichnet,**
**dass** der Grundkörper (1) eine ringförmige Befestigungsnut (7) aufweist, in welche das elastische Element (8) eingeklemmt ist.

7. Filterplatte nach einem der Ansprüche 1 bis 4,
**dadurch gekennzeichnet,**
**dass** das elastische Element (8) mittels einer Schraubverbindung oder einer Schweißverbindung an dem Grundkörper (1) befestigt ist.

8. Filterplatte nach einem der vorhergehenden Ansprüche,
**dadurch gekennzeichnet,**
**dass** die Temperierplatte (6) aus einem Metall oder aus wärmeleitendem Kunststoff oder einer Kombination hiervon besteht.

9. Filterplatte nach einem der vorhergehenden Ansprüche,
**dadurch gekennzeichnet,**
**dass** auf zumindest einer Oberfläche der Temperierplatte (6) durch ein Drahtgitter (11) Kanäle gebildet sind, wobei das Drahtgitter (11) auf der Oberfläche der Temperierplatte (6) angeordnet ist.

10. Filterplatte nach Anspruch 9,
**dadurch gekennzeichnet,**
**dass** die Kanäle durch eine Profilierung der Oberfläche der Temperierplatte (6) gebildet sind.

11. Filterplatte nach einem der vorhergehenden Ansprüche,
**dadurch gekennzeichnet,**
**dass** das elastische Element (8) und die Temperierplatte (6) eine Membran bilden.

12. Filterpaket umfassend mehrere Filterplatten, wobei zumindest eine der Filterplatten gemäß einem der Ansprüche 1 bis 11 ausgebildet ist, auf einer Seite der aus dem elastischen Element (8) und der Temperierplatte (6) gebildeten Einheit eine Filterkammer (22) gebildet ist und eine Temperiereinrichtung zum Temperieren der Temperierplatte (6) vorgesehen ist.

13. Filterpaket nach Anspruch 12,
**dadurch gekennzeichnet,**
**dass** die Temperierplatte (6) elektrisch beheizbar ist.

14. Filterpaket nach Anspruch 12,
**dadurch gekennzeichnet,**
**dass** von der anderen, der Filterkammer abgewandten Seite der aus dem elastischen Element (8) und der Temperierplatte (6) gebildeten Einheit her die Temperierplatte (6) mit einem Temperiermedium beaufschlagbar ist.

15. Filterpaket nach Anspruch 12,
**dadurch gekennzeichnet,**
**dass** die Temperierplatte (6) Temperierkanäle aufweist, durch die ein Temperiermedium durchleitbar ist.

## Claims

1. A filter plate having a basic body (1) and an elastic element (8) which is fastened to the basic body (1) in an annular and liquid-tight manner,
**characterized in that**
a temperature-control plate (6) consisting of a heat-conducting material is fastened to the elastic element (8).

2. The filter plate as claimed in claim 1,
**characterized in that**
the temperature-control plate (6) is fastened to the elastic element (8) such that forces exerted only by the elastic element (8) counteract a thermal change in size of the temperature-control plate (6) and/or of the basic element (1).

3. The filter plate as claimed in claim 1 or 2,
**characterized in that**
the temperature-control plate (6) is retained on the elastic element in a manner spaced apart from the basic body (1) in the direction of the plate plane (X-Y).

4. The filter plate as claimed in one of the preceding claims,
**characterized in that**
the elastic element (8) is annular and inside the annular elastic element (8), the temperature-control plate (6) is fastened to the elastic element (8) in a liquid-tight manner and retained thereon.

5. The filter plate as claimed in one of the preceding claims,
**characterized in that**
the elastic element (8) is fastened to the basic body (1) by means of a snap connection.

6. The filter plate as claimed in claim 5,
**characterized in that**
the basic body (1) has an annular fastening groove (7), in which the elastic element (8) is clamped.

7. The filter plate as claimed in claim 1 to 4,
**characterized in that**
the elastic element (8) is fastened to the basic body by means of a screw connection or a welded connection.

8. The filter plate as claimed in one of the preceding claims,
**characterized in that**
the temperature-control plate (6) consists of a metal or of heat-conducting plastics material or a combination thereof.

9. The filter plate as claimed in one of the preceding claims,
**characterized in that**
channels are formed on at least one surface of the temperature-control plate (6) by a wire grid (11) which is arranged on the surface of the temperature-control plate (6).

10. The filter plate as claimed in claim 9,
**characterized in that**
the channels are formed by profiling of the surface of the temperature-control plate (6).

11. The filter plate as claimed in one of the preceding claims,
**characterized in that**
the elastic element (8) and the temperature-control plate (6) form a membrane.

12. A filter assembly comprising a plurality of filter plates, wherein
at least one of the filter plates is formed as claimed in one of claims 1 to 11,
a filter chamber (22) is formed on one side of the unit formed from the elastic element (8) and the temperature-control plate (6), and
a temperature-control device for temperature-controlling the temperature-control plate (6) is provided.

13. The filter assembly as claimed in claim 12,
**characterized in that**
the temperature-control plate (6) is electrically heatable.

14. The filter assembly as claimed in claim 12,
**characterized in that**
the temperature-control plate (6) can be subjected to a temperature-control medium from the other side, remote from the filter chamber, of the unit formed from the elastic element (8) and the temperature-control plate (6).

15. The filter plate as claimed in one of the preceding claims,
**characterized in that**
the temperature-control plate (6) has temperature-control channels, through which a temperature-control medium can be passed.

## Revendications

1. Plaque filtrante comprenant un corps de base (1) et un élément élastique (8) qui est fixé sur le corps de base (1) sous forme annulaire et étanche aux liquides,
**caractérisée en ce que**
une plaque de thermorégulation (6) est fixée sur l'élément élastique (8), laquelle se compose d'un matériau thermoconducteur.

2. Plaque filtrante selon la revendication 1,
**caractérisée en ce que**
la plaque de thermorégulation (6) est fixée sur l'élément élastique (8) de telle sorte que seulement des forces exercées par l'élément élastique (8) s'opposent à une variation de grandeur thermique de la plaque de thermorégulation (6) et/ou de l'élément de base (1).

3. Plaque filtrante selon la revendication 1 ou 2,
**caractérisée en ce que**
la plaque de thermorégulation (6) est retenue dans la direction du plan de plaque (X-Y) à distance du corps de base (1) sur l'élément élastique.

4. Plaque filtrante selon l'une quelconque des revendications précédentes,
**caractérisée en ce que**
l'élément élastique (8) est annulaire et à l'intérieur de l'élément élastique annulaire (8), la plaque de thermorégulation (6) est fixée de manière étanche aux liquides à l'élément élastique (8) et est retenue sur celui-ci.

5. Plaque filtrante selon l'une quelconque des revendications précédentes,
**caractérisée en ce que**
l'élément élastique (8) est fixé au corps de base (1) par une connexion par encliquetage.

6. Plaque filtrante selon la revendication 5,
**caractérisée en ce que**
le corps de base (1) présente une rainure de fixation annulaire (7) dans laquelle l'élément élastique (8) est serré.

7. Plaque filtrante selon l'une quelconque des revendications 1 à 4,
**caractérisée en ce que**
l'élément élastique (8) est fixé au corps de base (1) au moyen d'une connexion vissée ou d'une connexion soudée.

8. Plaque filtrante selon l'une quelconque des revendications précédentes,
**caractérisée en ce que**
la plaque de thermorégulation (6) se compose d'un métal ou de plastique thermoconducteur ou d'une combinaison de ceux-ci.

9. Plaque filtrante selon l'une quelconque des revendications précédentes,
**caractérisée en ce que**
des canaux sont formés sur au moins une surface de la plaque de thermorégulation (6) par un réseau de fils (11), le réseau de fils (11) étant disposé sur la surface de la plaque de thermorégulation (6).

10. Plaque filtrante selon la revendication 9,
**caractérisée en ce que**
les canaux sont formés par un profilage de la surface de la plaque de thermorégulation (6).

11. Plaque filtrante selon l'une quelconque des revendications précédentes,
**caractérisée en ce que**
l'élément élastique (8) et la plaque de thermorégulation (6) forment une membrane.

12. Paquet filtrant comprenant plusieurs plaques filtrantes, au moins l'une des plaques filtrantes étant réalisée selon l'une quelconque des revendications 1 à 11, une chambre de filtre (22) étant formée d'un côté de l'unité constituée par l'élément élastique (8) et la plaque de thermorégulation (6) et un dispositif de thermorégulation étant prévu pour la thermorégulation de la plaque de thermorégulation (6).

13. Paquet filtrant selon la revendication 12,
**caractérisé en ce que**
la plaque de thermorégulation (6) peut être chauffée électriquement.

14. Paquet filtrant selon la revendication 12,
**caractérisé en ce que**
la plaque de thermorégulation (6) peut être sollicitée par un milieu de thermorégulation depuis l'autre côté opposé à la chambre de filtre de l'unité constituée par l'élément élastique (8) et la plaque de thermorégulation (6).

15. Paquet filtrant selon la revendication 12,
**caractérisé en ce que**
la plaque de thermorégulation (6) présente des canaux de thermorégulation à travers lesquels un milieu de thermorégulation peut être guidé.
